# EUROPEAN PATENT APPLICATION

(11) **EP 4 668 407 A1**
(43) Date of publication of application: **24.12.2025**
(21) Application number: 23955943.8
(22) Date of filing: 18.12.2023
(51) Int. Cl.: H01M 10/42

(54) **LAMINATED BATTERY CELL, SECONDARY BATTERY, AND ELECTRICAL APPARATUS**

(30) Priority: 18.10.2023 CN 202322792357 U
(71) Applicant: Contemporary Amperex Technology Co., Limited, Ningde, Fujian 352100 (CN)
(72) Inventor: HUANG, Shengyuan, Ningde, Fujian 352100 (CN); WANG, Hansen, Ningde, Fujian 352100 (CN); LIU, Chengyong, Ningde, Fujian 352100 (CN); WAN, Pan, Ningde, Fujian 352100 (CN); ZHANG, Rupeng, Ningde, Fujian 352100 (CN); WANG, Yuchun, Ningde, Fujian 352100 (CN); FENG, Fuxiang, Ningde, Fujian 352100 (CN)
(74) Representative: Ran, Handong
(86) International application number: PCT/CN2023/139538
(87) International publication number: WO 2025/081625

(57) **Abstract**

The present application belongs to the technical field of batteries, and particularly relates to an laminated battery cell, a secondary battery and an electrical apparatus. The laminated battery cell provided by the present application comprises a positive electrode sheet, a negative electrode sheet and a separator, the separator comprising a separator body; the separator body comprises a side surface facing the negative electrode sheet, the side surface being provided with a side edge, and at least part of the side edge being provided with an adhesive film layer; the adhesive film layer is arranged in a first direction and/or a second direction of the plane where the separator body is located, so as to form an accommodation area, the negative electrode sheet being located in the accommodation area. The laminated battery cell helps to improve the safety of batteries.

## Description

### CROSS-REFERENCE TO RELATED APPLICATIONS

The present application claims priority to Chinese Patent Application No. 2023227923575, filed on October 18, 2023 and entitled "Laminated Battery Cell, Secondary Battery, and Electrical Apparatus", which is incorporated herein by reference in its entirety.

### TECHNICAL FIELD

The present application relates to the field of batteries, and in particular, to a laminated battery cell, a secondary battery, and an electric device.

### BACKGROUND

At present, battery cells in batteries are mainly manufactured by lamination and winding processes. Laminated battery cells have been widely used due to their many advantages, such as high rate and high energy density. However, during charging and discharging processes of a battery, a laminated battery cell is prone to a short circuit, resulting in potential safety hazards of the battery.

### SUMMARY

In view of the above problems, the present application provides a laminated battery cell, a secondary battery, and an electric device, which helps to improve safety of a lithium metal secondary battery.

A first aspect of the present application discloses a laminated battery cell, comprising:
a positive electrode sheet;
a negative electrode sheet; and
a separator, comprising a separator body, wherein the separator body comprises a side surface facing the negative electrode sheet, the side surface has a side edge, and an adhesive film layer is disposed on at least part of the side edge; the adhesive film layer is disposed along a first direction and/or a second direction of a plane where the separator body is located to form an accommodating region, and the negative electrode sheet is located in the accommodating region; and
the first direction is different from the second direction.

In the present application, the negative electrode sheet is confined within the accommodating region formed by the adhesive film layer, so that "dead lithium" or "powdered lithium" and the like appearing on the negative electrode sheet may also be confined within the accommodating region, which helps to reduce the probability of a short circuit between positive and negative electrodes and further improve the safety of the battery.

In some implementations of the present application, along the second direction, there is a difference between the width of the separator body and the width of the negative electrode sheet, and the width of the adhesive film layer is less than the difference.

The present application selects to dispose the separator within a width difference interval formed by the separator body and the negative electrode sheet along the second direction, and this design manner can effectively reduce the impact on the negative electrode sheet.

In some implementations of the present application, along the second direction, there is a difference between the width of the separator body and the width of the negative electrode sheet. The difference is η, and the width of the adhesive film layer is Y, which satisfies Y<1/2×n.

To reduce the adhesive film layer overflowing onto the main body of the negative electrode sheet after hot pressing in a subsequent process, the present application selects to control the width value Y of the adhesive film layer to be less than 1/2×η.

In some implementations of the present application, along the second direction, there is a difference between the width of the separator body and the width of the negative electrode sheet. The difference is η, and the width of the adhesive film layer is Y, which satisfies: Y≤5/6×1/2×η.

The present application explores the suitable bonding degree of the adhesive film layer in detail in specific experimental exploration. As a result, it is found that the adhesive film layer satisfying the width relationship formula significantly reduces the probability of the adhesive film layer overflowing onto the main body of the electrode sheet after hot pressing.

In some implementations of the present application, along the first direction, the length of the adhesive film layer is greater than the length of the negative electrode sheet.

To better confine the negative electrode sheet within the accommodating region formed by the adhesive film layer, the present application selects to control the length of the adhesive film layer to be greater than the length of the negative electrode sheet.

In some implementations of the present application, the thickness of the adhesive film layer is not greater than the thickness of the negative electrode sheet.

In the present application, when the thickness of the adhesive film layer is not greater than the thickness of the negative electrode sheet, it not only helps to implement the technical purpose of confining the negative electrode sheet within the accommodating region, but also reduces the impact on a laminated battery cell preparation process and the impact on the performance of the battery cell itself as much as possible. For example, the adhesive film layer does not produce unreasonable protrusions, thereby preventing stress concentration in the main body of the battery cell.

In some implementations of the present application, the material of the adhesive film layer contains a mixture of polypropylene and a tackifying resin.

The adhesive film layer made of this material selected in the present application can be well adhered to the surface of the separator body, which satisfies the characteristic of good adhesion. In addition, the adhesive film layer further has the characteristic of strong corrosion resistance to electrolytes, and can also stably exist in the structure of the battery cell. For example, after hot pressing, the adhesive film layer does not overflow from the side edge of the separator body onto the position of the main body of the electrode sheet. For another example, the battery cell will expand during testing or use, and the adhesive film layer can satisfy mechanical stretching during expansion.

In some implementations of the present application, the adhesive film layer is disposed on all of the side edges.

In some implementations of the present application, the side surface comprises a first side surface and a second side surface that are disposed opposite to each other, wherein the first side surface and the second side surface are disposed at two ends of the separator;
a first adhesive film layer is disposed on part of a side edge of the first side surface;
a second adhesive film layer is disposed on part of a side edge of the second side surface; and
the first adhesive film layer is parallel to the second adhesive film layer.

In some implementations of the present application, the side surface comprises a first side surface and a second side surface that are disposed opposite to each other, wherein the first side surface and the second side surface are disposed at two ends of the separator;
a first adhesive film layer is disposed on part of a side edge of the first side surface;
a second adhesive film layer is disposed on part of a side edge of the second side surface; and
the first adhesive film layer and the second adhesive film layer are disposed in the battery cell to form the accommodating region.

A second aspect of the present application discloses a secondary battery, comprising the laminated battery cell according to the first aspect.

A third aspect of the present application discloses an electric device, comprising the laminated battery cell according to the first aspect or the secondary battery according to the second aspect.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

Various other advantages and benefits will become clear to a person of ordinary skill in the art upon reading the detailed description of the preferred embodiments below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is a schematic diagram of a structure of a laminated battery cell according to some embodiments of the present application;
FIG. 2 is a cross-sectional view of FIG. 1;
FIG. 3 is a schematic diagram of a structure of a laminated battery cell according to some embodiments of the present application;
FIG. 4 is a cross-sectional view of FIG. 3;
FIG. 5 is a schematic diagram of a structure of a separator according to some embodiments of the present application;
FIG. 6 is a schematic diagram of a structure of a laminated battery cell according to some embodiments of the present application;
FIG. 7 is a schematic diagram of a structure of a laminated battery cell according to some embodiments of the present application;
FIG. 8 is a schematic diagram of a structure of a laminated battery cell according to some embodiments of the present application;
FIG. 9 is a schematic diagram of a structure of a laminated battery cell according to some embodiments of the present application;
FIG. 10 is a schematic diagram of a structure of a laminated battery cell according to some embodiments of the present application;
FIG. 11 is a schematic diagram of a structure of a laminated battery cell according to some embodiments of the present application;
FIG. 12 is a schematic diagram of a structure of a laminated battery cell according to some embodiments of the present application;
FIG. 13 is a schematic diagram of a structure of a laminated battery cell according to some embodiments of the present application;
FIG. 14 is a schematic diagram of a structure of a laminated battery cell according to some embodiments of the present application;
FIG. 15 is a schematic diagram of a structure of a battery according to some embodiments of the present application; and
FIG. 16 is a schematic diagram of an exploded structure of a battery according to some embodiments of the present application.

Reference numerals in specific implementations are as follows:
1000, laminated battery cell;
100, separator; 200, negative electrode sheet; 300, positive electrode sheet;
101, separator body; 102, adhesive film layer; 103, accommodating region;
102a, first adhesive film layer; 102b, second adhesive film layer;
1011, side surface; 1021, side edge;
1011a, first side surface; 1011b, second side surface;
2000, lithium ion battery; 2100, housing; 2200, electrode assembly; 2300, cover plate.
x-axis direction: the length direction or width direction of the separator;
y-axis direction: the width direction or length direction of the separator;
z-axis direction: the thickness direction of the separator;
d1: the width value of the separator body along the y-axis direction;
d2: the width value of the negative electrode sheet along the y-axis direction;
η: the difference between the width values of the separator body and the negative electrode sheet along the y-axis direction;
Y: the width value of the adhesive film layer along the y-axis direction;
γ: the thickness value of the adhesive film layer along the z-axis direction;
Z: the thickness value of the negative electrode sheet along the z-axis direction.

### DESCRIPTION OF EMBODIMENTS

Hereinafter, implementations of a laminated battery cell, a secondary battery, and an electric device disclosed in the present application will be described in detail with reference to the accompanying drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if ranges of 60 to 120 and 80 to 110 are listed for specific parameters, it is understood that the ranges of 60 to 110 and 80 to 120 are also expected. Furthermore, if the smallest values 1 and 2 of a range are listed, and if the largest values 3, 4 and 5 of the range are listed, the following ranges may all be expected: 1-3, 1-4, 1-5, 2-3, 2-4, and 2-5. In the present application, unless otherwise stated, a numerical range "a to b" represents a shorthand representation for a combination of any real numbers between a and b, where both a and b are real numbers. For example, a numerical range of "0 to 5" represents that all real numbers in the range of "0 to 5" have been listed herein, and "0 to 5" is merely a shorthand representation of combinations of these numerical values. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in the present application may be performed sequentially or randomly, preferably sequentially. For example, the method includes steps (a) and (b), meaning that the method may include steps (a) and (b) performed sequentially or steps (b) and (a) performed sequentially. For example, the mentioned method may further include step (c), meaning that step (c) may be added to the method in any order, e.g., the method may include steps (a), (b) and (c), or steps (a), (c) and (b), or steps (c), (a) and (b), etc.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

Unless otherwise specified, in the present application, the terms "first", "second", and the like are used only for distinguishing different objects, but cannot be construed to indicate or imply relative importance or implicitly indicate the number, specific order, or primary/secondary relationship of indicated technical features.

Unless otherwise specified, in the present application, the term "a plurality of" means two or more (including two). Similarly, the term "a plurality of groups" means two or more groups (including two groups), and the term "a plurality of pieces" means two or more pieces (including two pieces).

Unless otherwise specified, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the accompanying drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

Unless otherwise specified and explicitly defined, the terms "mount", "couple", "connect", and "fix" should be broadly understood, for example, they may be a fixed connection, a detachable connection, or an integral connection; or may be a mechanical connection, or an electrical connection; or may be a direct connection, or an indirect connection via an intermediate medium or an internal communication between two elements or interaction between two elements. A person of ordinary skill in the art may understand the specific meanings of the above terms in the embodiments of the present application according to specific situations.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

A laminated battery cell has the advantages of high rate, high energy density, and the like. However, during charging and discharging processes of a battery, the laminated battery cell is prone to a short circuit. This problem is particularly severe when a negative electrode is made of lithium metal. The reason may be that the volume of the lithium metal negative electrode changes continuously during repeated lithium deintercalation and intercalation processes, which easily leads to mechanical pulverization of lithium metal and/or generation of lithium dendrites. The lithium dendrites are easy to fall off the electrode, and thereby cannot be effectively utilized, forming "dead lithium", and the mechanical pulverization of lithium metal is easy to generate "powdered lithium". Both the "dead lithium" and "powdered lithium" are easy to "escape" to the separator along the width direction and/or the length direction of the negative electrode sheet, and then transferred to the positive electrode sheet through the separator. This causes a short circuit between positive and negative electrodes. The short circuit occurring when the battery is overcharged is easy to cause the battery to catch fire or even explode, posing a great safety risk.

The prior art has mostly explored reducing the probability of mechanical pulverization and/or generation of lithium dendrites of the negative electrode as much as possible, but this method usually has a long cycle.

Through exploration, it is found that if the "dead lithium" and/or "powdered lithium" are immobilized, for example, being confined to the surface of the negative electrode sheet or the separator, the safety of a secondary battery can be improved by reducing the probability of direct contact with the positive electrode sheet.

Based on the above-mentioned considerations, to solve the problem that the "dead lithium" and/or "powdered lithium" of the negative electrode of the laminated battery cell is transferred from the negative electrode sheet to the positive electrode sheet, causing a short circuit between the positive and negative electrodes, according to the above-mentioned design concept and experimental research, a laminated battery cell, a secondary battery and an electric device are obtained.

### Laminated battery cell

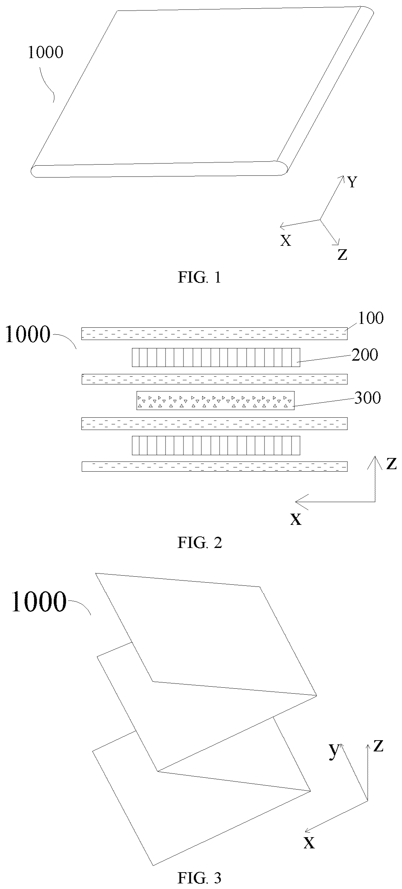

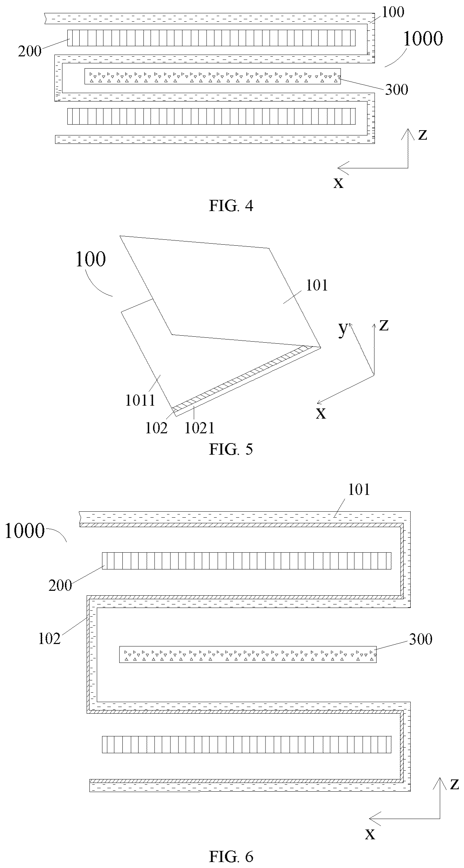

First, the present application provides a laminated battery cell. The laminated battery cell includes a positive electrode sheet, a negative electrode sheet, and a separator stacked in sequence. The laminated battery cell of the present application may have a structure illustrated in FIG. 1, FIG. 2, FIG. 3, or FIG. 4. In FIG. 1 and FIG. 2, the separator 100 has a sheet-like structure formed by cutting. In FIG. 3 and FIG. 4, the separator 100 has a continuous zigzag stack, and the separator that can be stacked in a zigzag shape illustrated in FIG. 3 and FIG. 4 may further have a certain curvature at a corner, which is not shown in FIG. 4 of the present application, but actually exists.

Regardless the shape of the separator, the separator includes a separator body 101. The separator body 101 includes a side surface facing the negative electrode sheet. As illustrated in FIG. 5, one side surface 1011 of the separator body 101 facing the negative electrode sheet is illustrated. The "side surface facing the negative electrode sheet" directly faces the negative electrode sheet, and the "side surface facing the negative electrode sheet" is distributed in a region formed along the first direction and/or the second direction of the separator body. The first direction is different from the second direction. Specifically, the first direction may be an x-axis direction, and the x-axis direction may be the length direction or width direction of the separator body. The second direction may be a y-axis direction, and the y-axis direction may be the width direction or length direction of the separator body. Generally, the length value of the separator body along the length direction is greater than the length value of the separator body along the width direction. If in some battery cells with special structures, the length and the width of the separator body are equal in value, the first direction or the second direction is any one of the two.

It can be learned with reference to FIG. 5 that the side surface 1011 of the separator body 101 has a side edge 1021. For the separator with the sheet-like structure, the side edge is distributed at one end, two ends, or more ends of the side surface along the first direction and/or the second direction (the x-axis direction and/or the y-axis direction) of the separator. For the zigzag stacked separator, the side edge is distributed at one end, two ends, or more ends of the side surfaces along the first direction of the separator, and the present application selects the x-axis direction as the first direction and the y-axis direction as the second direction for description.

To reduce the "dead lithium" or "powdered lithium" "escaping" to the separator along the width direction and/or the length direction of the negative electrode sheet, it can be learned with reference to FIG. 5 and FIG. 6 that the present application selects to dispose an adhesive film layer 102 on at least part of the side edge. Herein, "at least part" contains that the adhesive film layer may be disposed on all or part of the side edge. The adhesive film layer 102 is disposed along the first direction (the x-axis direction) and/or the second direction (the y-axis direction) of the separator body 101. The adhesive film layer 102 may be disposed on the surface of the separator body 101 in a "continuous" manner or a "discontinuous" manner. The "continuous" and "discontinuous" herein are relative concepts, where the "continuous" means that the adhesive film layer is continuous along the first direction and/or the second direction of the separator body and forms an uninterrupted whole. For example, for the zigzag stacked separator, the adhesive film layer may be continuous. The term "discontinuous" means that the adhesive film layer is discontinuous along the first direction and/or the second direction of the separator body. For example, for the sheet-like separator, the adhesive film layer may be discontinuously disposed on each layer of separator. Regardless of whether the adhesive film layer is "continuous" or "discontinuous", all the adhesive film layers can collectively enclose an accommodating region, and the negative electrode sheet is located in the accommodating region to restrict the "escape" of the "dead lithium" or "powdered lithium" on the negative electrode sheet.

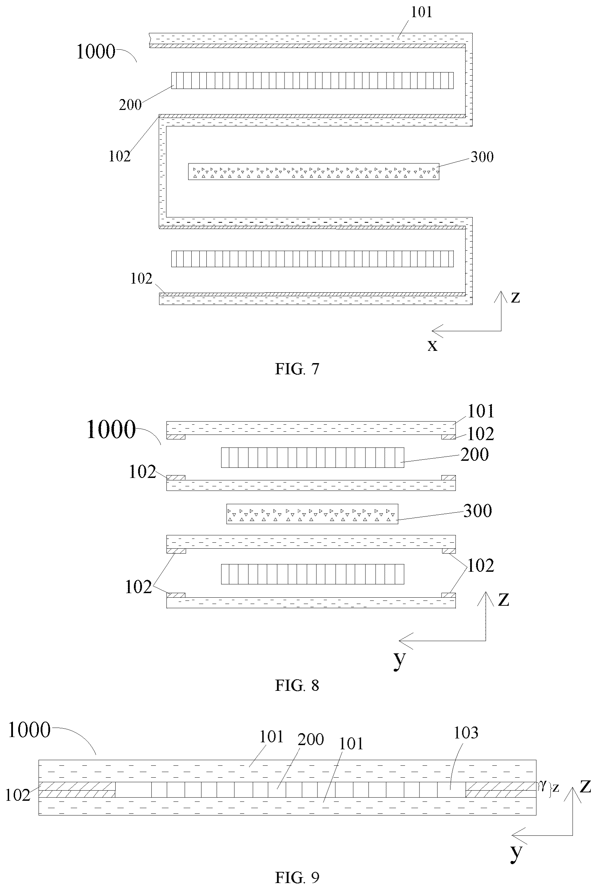

To better explain the distribution state of the adhesive film layer on the separator body, the zigzag stacked separator is used as an example for description in some embodiments of the present application. It can be learned with reference to FIG. 6 that the adhesive film layer 102 is continuously distributed along the first direction (the x-axis direction) and/or the second direction (the y-axis direction) of the separator body 101. This distribution manner is convenient for manufacturing the adhesive film layer on the separator body. It can be learned with reference to FIG. 7 that the adhesive film layer 102 is continuously distributed along the first direction (the x-axis direction) of the separator body 101, and no adhesive film layer is disposed at the corner of the separator, so that the adhesive film layer 102 on the separator body 101 is finally shown to be discontinuous. This design manner avoids the formation of the adhesive film layer at unnecessary positions.

For the adhesive film layers illustrated in FIG. 6 and FIG. 7, the present application further illustrates the distribution state of the adhesive film layers at two ends of the side surface in FIG. 8 to FIG. 11. It can be learned from FIG. 8 that the adhesive film layer 102 is distributed at two ends of the side surface along the first direction (the x-axis direction) of the separator body 101. Further, it can be learned with reference to FIG. 9 that the adhesive film layers 102 arranged at the two ends encloses an accommodating region 103, and the negative electrode sheet 200 is located in the accommodating region 103.

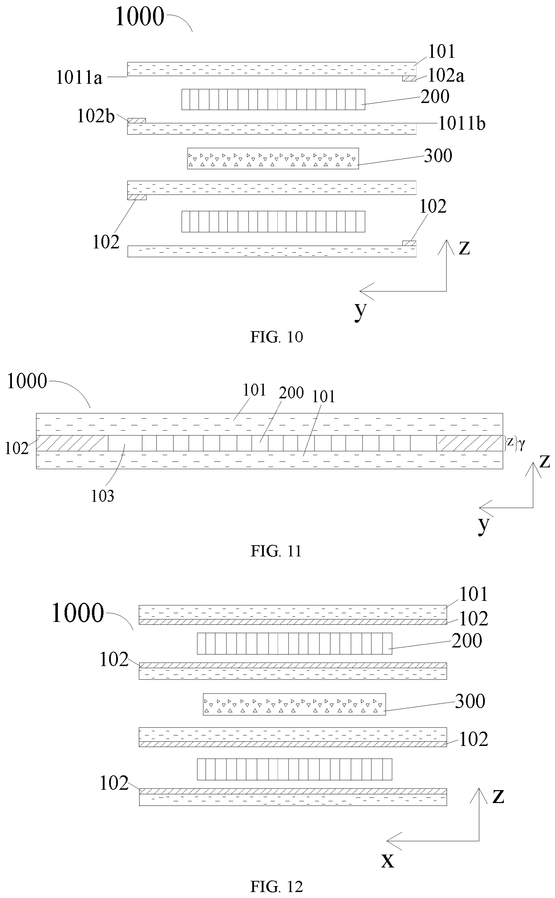

It can be learned with reference to FIG. 10 that the first adhesive film layer 102a is distributed at one end of the first side surface 1011a along the first direction (the x-axis direction) of the separator body 101, and the second adhesive film layer 102b is distributed at the other end of the second side surface 1011b along the first direction (the x-axis direction) of the separator body 101, where the first side surface 1011a and the second side surface 1011b are disposed opposite to each other and are respectively located at two ends of the negative electrode sheet 200 along the z-axis direction, and the first adhesive film layer 102a and the second adhesive film layer 102b are parallel to each other and are respectively located at two ends of the negative electrode sheet 200 along the first direction (the x-axis direction). Further, it can be learned with reference to FIG. 11, the first adhesive film layer 102a and the second adhesive film layer 102b can alternatively enclose the accommodating region 103.

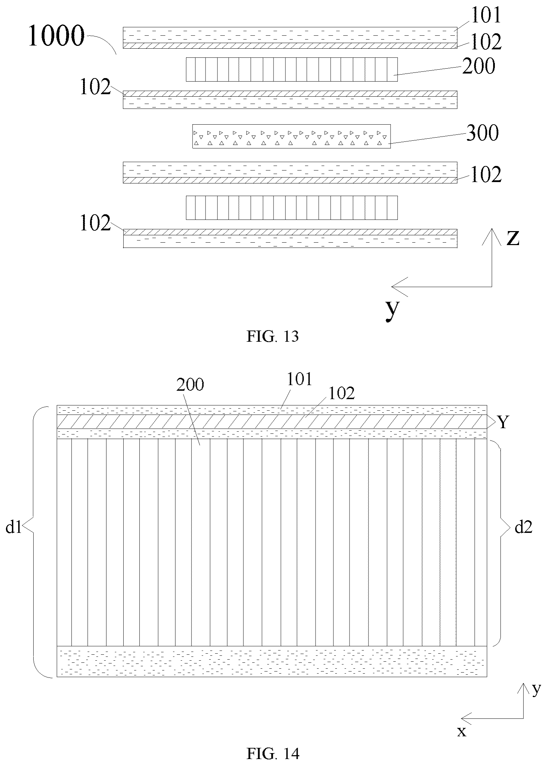

In some embodiments of the present application, the separator with the sheet-like structure is used as an example for description. In these embodiments of the present application, the adhesive film layer 102 is disposed along the first direction and/or the second direction of the separator body 101, as specifically illustrated in FIG. 12 and FIG. 13.

The accommodating region in the present disclosure may be formed by the adhesive film layer distributed along the first direction (the x-axis direction) and the z-axis direction, or may be formed by the adhesive film layer distributed along the second direction (the y-axis direction) and the z-axis direction, or may be formed by the adhesive film layer distributed along the first direction (the x-axis direction), the second direction (the y-axis direction) and the z-axis direction. For example, for the sheet-like separator, the adhesive film layer may be disposed along the first direction (the x-axis direction) and the z-axis direction, or may be disposed along the second direction (the y-axis direction) and the z-axis direction, or may even be disposed along the first direction (the x-axis direction), the second direction (the y-axis direction), and the z-axis direction at the same time.

The accommodating region formed in the present application can confine the negative electrode sheet within this region, and better prevent the escape of the "dead lithium" or the "powdered lithium", thereby improving the safety during battery cycling.

In some embodiments of the present application, the material of the separator body 101 contains, but is not limited to, a polyethylene film, a polypropylene film, a polypropylene/polyethylene/polypropylene composite film, and the like. The material of the adhesive film layer 102 contains, but is not limited to, a mixture formed by polypropylene and a tackifying resin in any ratio, where the tackifying resin is a hot melt adhesive with the strong bonding effect, and the hot melt adhesive contains an Escorez tackifying resin or other tackifying resins. The adhesive film layer made of this material can be well adhered to the surface of the separator body, which satisfies the characteristic of good adhesion, and the adhesive film layer further has the characteristic of strong corrosion resistance to electrolytes, and can also stably exist in the structure of the battery cell. For example, after hot pressing, the adhesive film layer does not overflow from the side edge of the separator body onto the position of the main body of the electrode sheet. For another example, the battery cell will expand during testing or use, and the adhesive film layer can satisfy mechanical stretching during expansion.

Some embodiments of the present application disclose the thickness of the adhesive film layer. In these embodiments of the present application, the impact of a laminated battery cell preparation process on the thickness of the adhesive film layer is not considered, so that the thickness of the adhesive film layer is not greater than the thickness of the negative electrode sheet, and the adhesive film layer with this thickness not only helps to implement the technical purpose of confining the negative electrode sheet within the accommodating region, but also can reduce the impact on the laminated battery cell preparation process and the performance of the battery cell itself as much as possible. For example, the adhesive film layer does not produce unreasonable protrusions, thereby preventing stress concentration in the main body of the battery cell.

It can be learned with reference to FIG. 9 and FIG. 11 that in some embodiments of the present application, the thickness of the adhesive film layer 102 is γ, the thickness of the negative electrode sheet 200 is Z, and the two satisfy: γ≤Z.

Some embodiments of the present application disclose that the thickness of the negative electrode sheet is 100 µm to 300 µm. In these embodiments, the thickness of the negative electrode sheet may be one of 100 µm, 120 µm, 150 µm, 180 µm, 200 µm, 220 µm, 250 µm, 280 µm, and 300 µm or any one of values within the range.

In the present application, each of the thickness of the adhesive film layer and the thickness of the negative electrode sheet is the distance between one end face and the other end face disposed opposite thereto along the z-axis direction, and the specific value thereof may be obtained by measurement, such as measuring the thicknesses before and after using a micrometer, and then calculating the difference, or may be obtained by photographing a slice sample along the thickness direction of the electrode sheet using a scanning electron microscope, and measuring the image obtained by the scanning electron microscope.

In some embodiments of the present application, the thickness γ of the adhesive film layer being equal to the thickness Z of the negative electrode sheet or the thickness γ of the adhesive film layer being half of the thickness Z of the negative electrode sheet is emphatically explored. In these embodiments of the present application, selecting this design manner not only helps to implement the technical purpose of confining the negative electrode sheet within the accommodating region, but also simplifies the preparation process.

Some embodiments of the present application further disclose the width value of the adhesive film layer along the second direction (the y-axis direction). In these embodiments, the present application does not consider the impact of the laminated battery cell preparation process on the width of the adhesive film layer. To implement the purpose of preventing the escape of the "dead lithium" or the "powdered lithium" by the above-mentioned adhesive film layer, and to reduce the impact of the adhesive film layer on the negative electrode sheet, the width value of the adhesive film layer along the second direction (the y-axis direction) satisfies the following condition: Along the second direction, there is a difference between the width of the separator body and the width of the negative electrode sheet, and the width of the adhesive film layer is less than the difference.

In the above, the present application describes that the adhesive film layer may be disposed on two side ends of the separator body along the x-axis direction, or may be disposed only on either side end of the separator body along the x-axis direction. In the design of the battery cell, the width value of the separator body along the y-axis direction is usually greater than the width value of the negative electrode sheet along the y-axis direction to implement coating of the electrode sheet with the separator. As illustrated in FIG. 14, the width value of the separator body 101 along the second direction (the y-axis direction) is d1, the width value of the negative electrode sheet 200 along the second direction (the y-axis direction) is d2, and the difference η between the two is d1-d2. The width value of the adhesive film layer 102 is Y, which satisfies: Y<1/2×η.

Some embodiments of the present application disclose that the widths of the separator body, the negative electrode sheet and the positive electrode sheet are between 30 mm and 60 mm. In these embodiments, the specific width value may be any one of 30 mm, 32 mm, 35 mm, 37 mm, 40 mm, 42 mm, 45 mm, 48 mm, 50 mm, 52 mm, 55 mm, 58 mm, and 60 mm, or any one of values within the range.

Some embodiments of the present application disclose that the separator body is a zigzag stack, so that the specific length thereof is not specifically described. The negative electrode sheet and the positive electrode sheet are sheet-like, whose length value is greater than the width value, and the specific value range is contained within 45 mm to 65 mm. In these embodiments, the specific length value may be any one of 45 mm, 48 mm, 50 mm, 52 mm, 55 mm, 58 mm, 60 mm, 62 mm, and 65 mm, or any one of values within the range.

In the present application, the width of each of the separator body, the negative electrode sheet, and the adhesive film layer along the y-axis direction is the distance between one end face and the other end face disposed opposite thereto along the y-axis direction, and the specific value thereof may be obtained by measurement, such as measuring the thicknesses before and after using a vernier caliper, and then calculating the difference.

In the present application, the separator, the negative electrode sheet, and the positive electrode sheet are to be laminated together by hot pressing in the laminated battery cell preparation process. To reduce the adhesive film layer overflowing onto the main body of the electrode sheet after hot pressing, the present application controls the width value Y of the adhesive film layer to satisfy: Y<1/2×η.

In some embodiments, the present application alternatively controls the width value Y of the adhesive film layer to satisfy: Y≤5/6×1/2×η. The adhesive film layer with this width value significantly reduces the probability of the adhesive film layer overflowing onto the main body of the electrode sheet after hot pressing.

Some embodiments of the present application disclose that the length of the adhesive film layer along the x-axis direction is greater than the length of the negative electrode sheet. The specific length of the adhesive film layer is not described in detail in these embodiments of the present application. The adhesive film layer with this length more helps to confine the negative electrode sheet within the accommodating region.

In the present application, the lengths of the adhesive film layer and the negative electrode sheet along the x-axis direction may be obtained by measurement, such as directly measuring using a vernier caliper.

In some embodiments of the present application, the negative electrode sheet of the laminated battery cell is a negative electrode current collector, or the negative electrode sheet contains a negative electrode current collector, and lithium metal or a lithium alloy located on at least one side surface of the negative electrode current collector. In these embodiments of the present application, the adhesive film layer being disposed on the separator body is explored. The adhesive film layer encloses an accommodating region. The accommodating region confines the negative electrode sheet therein. The "dead lithium" and/or the "powdered lithium" that are easy to appear on the negative electrode sheet are immobilized to reduce the probability of direct contact with the positive electrode sheet, thereby improving the safety of the secondary battery. For example, the probability of fire or even explosion that is easily caused by overcharging of a lithium metal battery can be reduced.

In some embodiments of the present application, the negative electrode sheet of the laminated battery cell contains a negative electrode current collector, and a negative electrode film layer disposed on at least one side surface of the negative electrode current collector. In these embodiments of the present application, the adhesive film layer being disposed on the separator body is explored. The adhesive film layer encloses an accommodating region. The accommodating region confines the negative electrode sheet therein. The "powdered lithium" or the "lithium dendrites" that are easy to appear on the negative electrode sheet are immobilized to reduce the probability of direct contact with the positive electrode sheet, thereby reducing the probability of a short circuit of the battery.

### Separator

A separator body disclosed in some embodiments of the present application may be any well-known porous structure separator with good chemical stability and mechanical stability. For example, a material of the separator may include, but is not limited to, one or a combination of two or more of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

### Negative electrode sheet

According to some embodiments of the present application, a negative electrode sheet contains a negative electrode current collector, and a negative electrode film layer disposed on at least one side surface of the negative electrode current collector. The negative electrode film layer in the negative electrode sheet contains a negative electrode active material, a binder, a conductive agent, a dispersant, and the like. The negative electrode active material contains a carbonaceous material. The carbonaceous material contains one or a combination of two or more of artificial graphite, natural graphite, soft carbon, and hard carbon. The artificial graphite, natural graphite, soft carbon, hard carbon, and the like contain any form of materials in the art, and contain any conventional manufacturer and model in the art. In addition, the negative electrode active material may further contain a silicon-based material. The silicon-based material contains one or two of a silicon oxygen material or a silicon carbon material. In addition, the negative electrode active material may further contain a silicon-carbon composite, a Li-Sn alloy, a Li-Sn-O alloy, Sn, SnO, SnO₂, TiO₂-Li₄Ti ₅O₁₂, or a Li-Al alloy. However, the present application is not limited to these materials, and other conventional materials that can be used as negative electrode active materials for lithium ion batteries can alternatively be used. These negative pole active materials may be used alone or in combination of two or more thereof. The types of the binder, the conductive agent and the dispersant in the negative electrode sheet may be the same as those in the positive electrode sheet.

According to some embodiments of the present application, the negative electrode sheet is a negative electrode current collector, or the negative electrode sheet contains a negative electrode current collector and lithium metal or a lithium alloy located on at least one side surface of the negative electrode current collector. The thickness of the lithium metal is usually relatively thin, such as <25 µm. The lithium alloy contains an alloy of lithium metal and at least one of tin (Sn), zinc (Zn), aluminum (Al), magnesium (Mg), silver (Ag), gold (Au), gallium (Ga), indium (In), foil (Pt), boron (B), carbon (C), silicon (Si), and the like.

The negative electrode current collector may be a metal foil or a composite current collector. The metal foil may be a copper foil. The composite current collector may include a polymer material base layer and a metal layer formed on at least one surface of the polymer material base layer. The composite current collector may be formed by forming a metal material such as copper, copper alloy, nickel, nickel alloy, titanium, titanium alloy, silver, or silver alloy on a base material of a polymer material such as polypropylene (PP), polyethylene terephthalate (PET), polybutylene terephthalate (PBT), polystyrene (PS), or polyethylene (PE).

### Positive electrode sheet

A positive electrode sheet in the present application includes a positive electrode current collector, and a positive film layer disposed on at least one side surface of the positive electrode current collector, where the positive electrode film layer contains a positive electrode active material, a positive electrode conductive agent, a positive electrode binder, and the like. The present application does not specifically limit the specific types of the positive electrode active material. For example, when the positive electrode sheet is applied to a lithium ion battery, the positive electrode active material contains, but is not limited to, one or more of LiCoO₂, LiNiO₂, LiMnO₂, LiMn₂O₄, LiNi_{1/3}Co_{1/3}Mn_{1/3}O₂ (NCM111), LiNi_{0.5}Co_{0.2}Mn_{0.3}O₂ (NCM523), LiNi_{0.6}CO_{0.2}Mn_{0.2}O₂ (NCM622), LiNi_{0.8}CO_{0.1}Mn_{0.1}O₂ (NCM811), LiNi_{0.85}CO_{0.15}Al_{0.05}O₂, LiFePO₄ (LFP) and LiMnPO₄. The conductive agent contains, but is not limited to, one or a combination of two or more of graphite, superconducting carbon, carbon black (such as acetylene black, ketjen black, or Super P), a carbon dot, a carbon nanotube, graphene, and a carbon nanofiber. The positive electrode binder contains, but is not limited to, one or a combination of two or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylate resin, styrenebutadiene rubber, polyacrylic acid, sodium polyacrylate, polyacrylamide, polyvinyl alcohol, sodium alginate, polymethacrylic acid, and carboxymethyl chitosan. In the present application, the positive electrode current collector may be a metal foil or a composite current collector, where the metal foil may be an aluminum foil, and the composite current collector may include a polymer material base layer and a metal layer formed on at least one surface of the polymer material base layer. The composite current collector may be formed by forming a metal material such as aluminum, aluminum alloy, nickel, nickel alloy, titanium, titanium alloy, silver, or silver alloy on a base material of a polymer material such as polypropylene (PP), polyethylene terephthalate (PET), polybutylene terephthalate (PBT), polystyrene (PS), or polyethylene (PE).

### Electrolyte

According to some embodiments of the present application, the electrolyte functions to conduct ions between the positive electrode sheet and the negative electrode sheet. The type of the electrolyte is not specifically limited in the present application, and may be selected according to a requirement. For example, the electrolyte may be liquid, gelled or all solid. An electrolyte solution includes an electrolyte salt and a solvent. The electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluorodioxalate phosphate (LiDFOP), and lithium tetrafluorooxalate phosphate (LiTFOP). The concentration of the electrolyte salt is usually 0.5 mol/L to 5 mol/L. The solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and ethyl sulfonyl ethane (ESE). The electrolyte solution further optionally includes an additive. For example, the additive may include a negative pole film-forming additive or a positive pole film-forming additive, and may further include an additive capable of improving specific performance of a battery, for example, an additive for improving overcharge performance of a battery, or an additive for improving high-temperature or low-temperature performance of a battery.

### Secondary battery

The laminated battery cell provided by the present application can immobilize the "dead lithium" and/or the "powdered lithium", such as confining the "dead lithium" and/or the "powdered lithium" to the surface of the negative electrode sheet or the separator, which can effectively reduce the probability of direct contact between the "dead lithium" and/or the "powdered lithium" and the positive electrode sheet. The laminated battery cell is made into a secondary battery. The secondary battery may include an outer package. The outer package may be used to package the laminated battery cell described above. The outer package of the secondary battery may be a hard shell, such as a hard plastic shell, an aluminum shell, or a steel shell. The outer package of the secondary battery may also be a pouch, such as a bag-type pouch. The material of the pouch may be plastic, and examples of the plastic include polypropylene, polybutylene terephthalate, and polybutylene succinate.

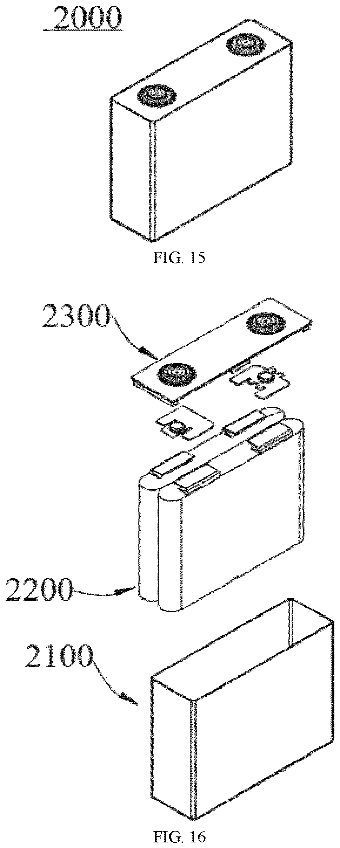

The shape of the secondary battery is not limited in this application, and may be a cylindrical shape, a square shape, or any other shape. For example, FIG. 15 shows a lithium ion battery 2000 having a square structure as an example.

According to some embodiments of the present application, with reference to FIG. 16, the outer package may include a housing 2100 and a cover plate 2300. The housing 2100 may include a bottom plate and side plates connected to the bottom plate, and the bottom plate and the side plates enclose an accommodating chamber. The housing 2100 has an opening in communication with the accommodating chamber. The cover plate 2300 can cover the opening to close the accommodating chamber. The positive electrode sheet, the negative electrode sheet, and the separator may be formed into an electrode assembly 2200 through a winding process or a lamination process. The electrode assembly 2200 is packaged in the accommodating chamber. The electrode assembly 2200 is impregnated with the electrolyte solution. There may be one or a plurality of electrode assemblies 2200 contained in the lithium ion battery 2000, and the number may be selected by those skilled in the art according to specific practical requirements.

### Electric device

According to some embodiments of the present application, the secondary battery is applied to an electric device. The secondary battery may be applied to, but not limited to, an electric device such as a vehicle, a ship, or an aircraft, and the electric device is further applied to a power supply system, to implement the technical purpose of improving safety.

An embodiment of the present application provides an electric device using a secondary battery as a power supply. The electric device may include, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

### Selection of separator

A separator body made of a polypropylene material, where the separator body has the width of 47 mm and the thickness of 10 µm to 100 µm along the y-axis direction.

An adhesive film layer is attached to the separator body, and the adhesive film layer is distributed at either end of the side surface along the first direction (the x-axis direction) of the separator body.

### Selection of negative electrode sheet

Copper foil having the length×width×thickness of 51 mm×41 mm×150 µm.

### Selection of positive electrode sheet

NCM811, a binder polyvinylidene fluoride, a conductive agent superconducting carbon, and a dispersant carboxymethyl cellulose are mixed in the mass ratio of 97:2:0.8:0.2. A solvent N-methylpyrrolidone (NMP) is added. The mixture is stirred to be stable and uniform under the action of a vacuum stirrer to obtain a positive electrode slurry. A positive electrode current collector aluminum foil is uniformly coated with the positive electrode slurry with the coating weight of 0.275 g/1540 mm ². After drying, cold pressing, and slitting, a conventional positive electrode sheet is obtained. The positive electrode sheet has the length×width of 50 mm×40 mm.

### Preparation of laminated battery cell

The above-mentioned separator, negative electrode sheet and positive electrode sheet are stacked layer by layer, where a negative electrode has 11 layers, a positive electrode has 10 layers, the separator is stacked in a zigzag shape, and ethylene carbonate and ethyl methyl carbonate are injected into a laminated battery cell in the volume ratio of 5:5.

### (1) Investigating whether laminated battery cell is qualified

Example 1 to Example 6 and Comparative Example 1 disclosed that the adhesive film layers with different thicknesses were distributed at either end of the side surface along the first direction (the x-axis direction) of the separator body (in a continuous manner). Comparative Example 2 disclosed that the adhesive film layer was discontinuously disposed on the side surface of the separator body distributed along the first direction (the x-axis direction).

Comparative Example 3 disclosed that no adhesive film layer was provided.

The present application further explored results of a cycle test performed after the battery cell was hot-pressed.

Test method: Each laminated battery cell was hot-pressed at 70°C for 60s, then charged at the constant current of 0.5C to a voltage U1 and charged at the constant voltage of U1 to 0.05C, stood for 10 min, was discharged at the constant current of 0.5C to a voltage U2, and stood for 10 min.

After the above-mentioned steps were repeated for 100 cycles, the battery cell was disassembled.

Battery cells that had not reached 100 cycles were also marked.

After the positive and negative electrode sheets were disassembled, whether there was an obvious overflow phenomenon of powdered lithium at overhangs between the negative electrode sheet and the separator was observed. The overhangs herein referred to parts of the separator that exceed beyond the negative electrode sheet along the x-axis direction and the y-axis direction.

### Determination criteria:

Qualified: There was no short-circuit overcharge phenomenon during battery cycling, and after disassembly, the structure of the adhesive film layer was complete, the powdered lithium was effectively confined within the accommodating region enclosed by the adhesive film layer, and there was no obvious overflow and migration of the powdered lithium.

Unqualified: After the battery was overcharged and short-circuited or disassembled in advance, the structure of the adhesive film layer was incomplete or had pores, or the powdered lithium had obvious overflow and migration, or the powdered lithium could be obviously observed on the positive electrode sheet.

**Table 1: List of parameters and performance of Examples and Comparative Examples (I)**

| No. | Region of adhesive film layer | Thickness of adhesive film layer (µm) | Width of adhesive film layer on one side (mm) | Whether the separator is closed | State after disassembly | Qualified or not |
|---|---|---|---|---|---|---|
| Example 1 | Two sides | **75** | **2.5** | Yes | The battery cell is not overcharged, and the adhesive film layer is complete | qualified |
| Example 2 | Two sides | **50** | **2.5** | Yes | The battery cell is not overcharged, and the adhesive film layer is complete | qualified |
| Example 3 | Two sides | **25** | **2.5** | Yes | The battery cell is not overcharged, and the adhesive film layer is complete | qualified |
| Example 4 | Two sides | **15** | **2.5** | Yes | The battery cell is not overcharged, and the adhesive film layer is complete | qualified |
| Example 5 | Two sides | **10** | **2.5** | Yes | The battery cell is not overcharged, and the adhesive film layer is complete | qualified |
| Example 6 | The upper and lower sides | **50** | **2.5** | Yes | The battery cell is not overcharged, and the adhesive film layer is complete | qualified |
| Comparative example 1 | Either the upper or the lower side | **50** | **2.5** | No | The battery cell is overcharged, the adhesive film layer at the upper end is complete, and the lithium power at the lower end overflows | unqualified |
| Comparative example 2 | - | **50** | **2.5** | Yes | The battery cell is overcharged, and the lithium powder overflows | unqualified |
| Comparative example 3 | None | None | None | No | The battery cell is overcharged | unqualified |

It can be learned from Table 1 that, for the lithium metal battery, if the adhesive film layer is formed only on one side of the side surface, and the adhesive film layer cannot enclose an accommodating region, the powdered lithium still cannot be effectively prevented from overflowing. In addition, if the adhesive film layer is formed only on one side of the side surface, but the adhesive film layer can still enclose the accommodating region, the powdered lithium can still be effectively prevented from overflowing. In addition, for the discontinuously distributed adhesive film layer, even if a certain closed interval can be finally formed, since complete closure cannot be achieved, it is still easy to cause the lithium powder to overflow.

In addition, since the adhesive film layers arranged on two sides can finally form the accommodating region, that is, implementing the closure of the separator, the thickness of the adhesive film layer only needs to be not greater than the thickness of the negative electrode sheet.

### (2) Exploring for appropriate width of adhesive film layer

Examples 7 to 11 and Comparative Example 4 disclosed that the adhesive film layer (having the thickness of 100 µm) is distributed at two ends of the side surface along the first direction (the x-axis direction) of the separator body. Whether the adhesive film layers with different widths had adhesive overflow after the battery cell was hot-pressed was further explored.

Test method: Each laminated battery cell was hot-pressed at 70°C for 60s, and the battery cell was disassembled to observe whether the adhesive overflowed onto the main body of the electrode sheet.

The list of parameters of Examples 7 to 11 is shown in Table 2, and the difference between the separator body and the negative electrode sheet along the width direction is (47 mm-41 mm)=6 mm. The width of the adhesive film layer is <3 mm.

**Table 2: List of parameters and performance of Examples and Comparative Examples (II)**

| No. | Width of adhesive film layer on one side (mm) | Whether the separator is closed | Whether the adhesive overflows onto the main body of the electrode sheet |
|---|---|---|---|
| Comparative example 4 | **3** | Yes | Yes |
| Example 7 | **2.7** | Yes | Yes |
| Example 8 | **2.5** | Yes | No |
| Example 9 | **2** | Yes | No |
| Example 10 | **1.5** | Yes | No |
| Example 11 | **1** | Yes | No |

It can be learned from Table 2 that the adhesive film layer is distributed at two ends of the side surface along the first direction (the x-axis direction) of the separator body, so that the separator can be well closed. In addition, when the difference between the separator body and the negative electrode sheet along the width direction is 6 mm, the problem of adhesive overflow after hot pressing may be effectively reduced when the width of the adhesive film layer on one side is ≤2.5 mm, so that the present application selects to control the width value Y of the adhesive film layer to satisfy: Y≤5/6×1/2×η. The adhesive film layer with this width value significantly reduces the probability of the adhesive film layer overflowing onto the main body of the electrode sheet after hot pressing, that is, the impact of the adhesive film layer on the negative electrode sheet is reduced.

The present application further tests the battery cells of the examples and comparative examples according to the above-mentioned cycling test method, and results are shown in Table 3.

**Table 3: List of performance of Examples and Comparative Examples (III)**

| No. | State after disassembly | Qualified or not |
|---|---|---|
| Comparative example 4 | The battery cell is overcharged, and the adhesive film layer is incomplete | unqualified |
| Example 7 | The battery cell is not overcharged, and the adhesive film layer is slightly broken, which can be ignored | qualified |
| Example 8 | The battery cell is not overcharged, and the adhesive film layer is complete | qualified |
| Example 9 | The battery cell is not overcharged, and the adhesive film layer is complete | qualified |
| Example 10 | The battery cell is not overcharged, and the adhesive film layer is complete | qualified |
| Example 11 | The battery cell is not overcharged, and the adhesive film layer is complete | qualified |

It can be learned from Table 3 that even if a small part of the adhesive film layer is incomplete, the impact on the battery cycling process is limited.

In summary, in the present application, the lithium metal battery is used as an example, and the adhesive film layer disposed on the separator body is explored. The adhesive film layer encloses the accommodating region. The accommodating region confines the negative electrode sheet therein. The "dead lithium" and/or "powdered lithium" that are easy to occur on the negative electrode sheet are immobilized to reduce the probability of direct contact with the positive electrode sheet, thereby improving the safety of the secondary battery.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A laminated battery cell, comprising:
a positive electrode sheet;
a negative electrode sheet; and
a separator, comprising a separator body, wherein:
the separator body comprises a side surface facing the negative electrode sheet, the side surface has a side edge, and an adhesive film layer is disposed on at least part of the side edge;
the adhesive film layer is disposed along a first direction and/or a second direction of a plane where the separator body is located to form an accommodating region, and the negative electrode sheet is located in the accommodating region; and
the first direction is different from the second direction.

2. The laminated battery cell according to claim 1, wherein along the second direction, there is a difference between the width of the separator body and the width of the negative electrode sheet, and the width of the adhesive film layer is less than the difference.

3. The laminated battery cell according to either of claims 1 and 2, wherein along the second direction, there is a difference between the width of the separator body and the width of the negative electrode sheet, the difference is η, and the width of the adhesive film layer is Y, which satisfies: Y<1/2×η.

4. The laminated battery cell according to any one of claims 1 to 3, wherein along the second direction, there is a difference between the width of the separator body and the width of the negative electrode sheet, the difference is η, and the width of the adhesive film layer is Y, which satisfies: Y≤5/6×1/2×η.

5. The laminated battery cell according to any one of claims 1 to 4, wherein along the first direction, the length of the adhesive film layer is greater than the length of the negative electrode sheet.

6. The laminated battery cell according to any one of claims 1 to 5, wherein the thickness of the adhesive film layer is not greater than the thickness of the negative electrode sheet.

7. The laminated battery cell according to any one of claims 1 to 6, wherein:
the side surface comprises a first side surface and a second side surface that are disposed opposite to each other, and the first side surface and the second side surface are disposed at two ends of the separator;
a first adhesive film layer is disposed on part of a side edge of the first side surface;
a second adhesive film layer is disposed on part of a side edge of the second side surface; and
the first adhesive film layer is parallel to the second adhesive film layer.

8. The laminated battery cell according to any one of claims 1 to 7, wherein:
the side surface comprises a first side surface and a second side surface that are disposed opposite to each other, and the first side surface and the second side surface are disposed at two ends of the separator;
a first adhesive film layer is disposed on part of a side edge of the first side surface;
a second adhesive film layer is disposed on part of a side edge of the second side surface; and
the first adhesive film layer and the second adhesive film layer are disposed in the battery cell to form the accommodating region.

9. A secondary battery, comprising the laminated battery cell according to any one of claims 1 to 8.

10. An electric device, comprising the laminated battery cell according to any one of claims 1 to 8 or the secondary battery according to claim 9.
